# EUROPEAN PATENT SPECIFICATION

(11) **EP 4 435 265 B1**
(45) Date of publication and mention of the grant of the patent: **11.11.2026**
(21) Application number: 24157560.4
(22) Date of filing: 14.02.2024
(51) Int. Cl.: F04D 17/10, F02C 7/06, F02C 7/28, F04D 25/02, F04D 29/12, F04D 29/056, F04D 29/063

(54) **AIR PRESSURISATION SYSTEM**
DRUCKLUFTSYSTEM
SYSTÈME DE PRESSURISATION D'AIR

(30) Priority: 21.03.2023 GB 202304066
(43) Date of publication of application: 25.09.2024
(73) Proprietor: Rolls-Royce plc, London N1 9FX (GB)
(72) Inventor: Murray, Christopher, Derby, DE24 8BJ (GB); Howarth, Nicholas, Derby, DE24 8BJ (GB)
(74) Representative: Rolls-Royce plc

(56) References cited:
- EP-A1- 0 235 392
- WO-A2-2008/105831
- US-A1- 2005 058 533
- US-B2- 8 966 875

## Description

### TECHNICAL FIELD

The present disclosure relates to air pressurisation systems for providing air to an airframe system, particularly a cabin pressurisation system. The present disclosure also concerns an aircraft comprising an airframe, a gas turbine engine and an air pressurisation system.

### BACKGROUND

It is known to pressurise a cabin of an aircraft using an air pressurisation system which makes use of engine bleed air which is bled from a compressor section of the core of a gas turbine engine. Bleeding high pressure air from the gas turbine engine reduces its efficiency and thereby increases its fuel consumption.

It is therefore desirable to provide an improved air pressurisation system. Air pressurisation systems which make use of air which is taken from a lower pressure source of a gas turbine engine, such as a bypass duct, and which subsequently compress the air prior to delivering it to the cabin are also known. Some exemplary air pressurisation systems are described in EP3517436 B1, EP3517437 B1 and EP3517438 B1.

EP 235392 A1 relates to a blower for circulating larger gas volumes for high power laser systems which operate according to the gas-transportation principle.

US 2005/0058533 A1 relates to a compressor that compresses a gaseous mixture of air and fuel.

WO2008/105831 A2 relates to a turbine engine including a seal mounted in the opening in the air intake housing,

US 8966875 B2 relates to a gas turbine engine including a thermal system powered by a low spool of the gas turbine engine. The thermal system integrates a thermal management system and an environmental control system powered by the low spool.

### SUMMARY

According to a first aspect, there is provided an air pressurisation system for supplying pressurised air to a cabin of an aircraft, the air pressurisation system comprising: a blower compressor configured to be mechanically coupled to a spool of a gas turbine engine and configured to receive an inlet flow of air from a bypass duct of the gas turbine engine, and a delivery line configured to convey air compressed by the blower compressor to a cabin pressurisation system of the aircraft, wherein the blower compressor comprises: a rotor configured to be mechanically coupled to the spool of the gas turbine engine; and a bearing assembly. The bearing assembly is provided on an inlet side of the blower compressor and comprises an oil-lubricated bearing for supporting rotation of the rotor, wherein the oil-lubricated bearing is disposed within a bearing chamber. The blower compressor comprises a seal assembly for restricting oil from the bearing chamber from reaching an inlet of the blower compressor, wherein the seal assembly comprises: a seal disposed between the bearing chamber and an air buffer chamber; an air buffer inlet configured to receive a flow of pressurised air into the air buffer chamber; and an air buffer outlet configured to allow the flow of pressurised air to be exhausted from the air buffer chamber together with oil from the bearing chamber that has passed through the seal and become entrain within the flow of pressurised air.

The system may further comprise a first air buffer seal arranged to restrict a flow of air buffer air between the air buffer chamber and the air buffer inlet. The first air buffer seal may comprise a seal configured to create a tortuous path for air to pass between the air buffer chamber and the air buffer inlet. The first air buffer seal may be configured to be more effective in a flow direction from the air buffer chamber towards the air buffer inlet. The first air buffer seal may be a labyrinth seal comprising a plurality of fins. The fins may be angled relative to the flow of air between the air buffer chamber and the air buffer inlet, so that the first air buffer seal is more effective in a flow direction from the air buffer chamber towards the air buffer inlet.

The system may further comprise a second air buffer seal arranged to restrict a flow of air between the air buffer inlet and an inlet of the blower compressor. The second air buffer seal may comprise a seal configured to create a tortuous path for air to pass between the air buffer inlet and the air buffer chamber. The second air buffer seal may be configured to be more effective in a flow direction from the air buffer inlet towards the compressor inlet. The first air buffer seal may be positioned radially outward of the second air buffer seal. Accordingly, a leakage flow area through the first air buffer seal may be greater than a leakage flow area through the second air buffer seal.

The system may further comprise a flow restrictor configured to restrict a flow rate of air buffer air between the air buffer inlet and the air buffer chamber. An effective flow area of the flow restrictor may be smaller than the effective area of the first air buffer seal. The flow restrictor may be arranged between the air buffer inlet and the first air buffer seal.

The system may further comprise an oil slinger ring configured to rotate together with the rotor. The oil slinger ring may comprise an inner portion, configured to engage the rotor, and a radially extending portion extending from the inner portion towards the air buffer chamber. The radially extending portion may extend at least partially into the air buffer chamber. The oil slinger ring may be arranged between the seal and the air buffer chamber.

The first air buffer seal may have an outer radius smaller than an outer radius of the radially extending portion of the oil slinger ring. The oil slinger ring may further comprise an outer portion disposed at a radially outward position relative to the inner portion. The first air buffer seal may be positioned radially between the outer portion of the oil slinger ring and the rotor.

The seal assembly may comprise a housing element coupled to the compressor housing. A portion of the housing element may be at least partially axially aligned with, and radially inside of, the outer portion of the oil slinger ring. The first air buffer seal may be formed between the portion of the seal housing element and the outer portion of the oil slinger ring.

The air buffer chamber may comprise a radially inner surface arranged at an angle relative to a rotational axis of the rotor to thereby encourage oil that has passed through the seal to flow towards the air buffer outlet. For example, the angle between the radially inner surface and the rotor axis may be greater than 0° and less than 90°. The radially inner surface may slope downwardly and outwardly in use of the air pressure system, e.g. when the blower compressor is arranged with the rotor axis vertical.

An aircraft may comprise an airframe, a gas turbine engine and the above mentioned air pressurisation system. The air treatment apparatus may be located within an airframe of the aircraft and the blower compressor is located within the gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein. The scope of the invention is however defined by the appended claims.

### BRIEF DESCRIPTION OF THE DRAWINGS

Embodiments will now be described by way of example only with reference to the accompanying drawings, which are purely schematic and not to scale, and in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic view of an air pressurisation system, according to arrangements of the present disclosure, for supplying air to an airframe system;
Figure 5 is a schematic cross-sectional view of a blower compressor for the air pressurisation system, according to arrangements of the present disclosure;
**Figure 6** is a schematic sectional view of a seal assembly for the blower compressor shown in Figure 5;
Figure 7 is a schematic sectional view of another seal assembly for the blower compressor shown in Figure 5;
Figure 8 is a schematic diagram of an aircraft including an airframe, a gas turbine engine and an air pressurisation system.

### DETAILED DESCRIPTION

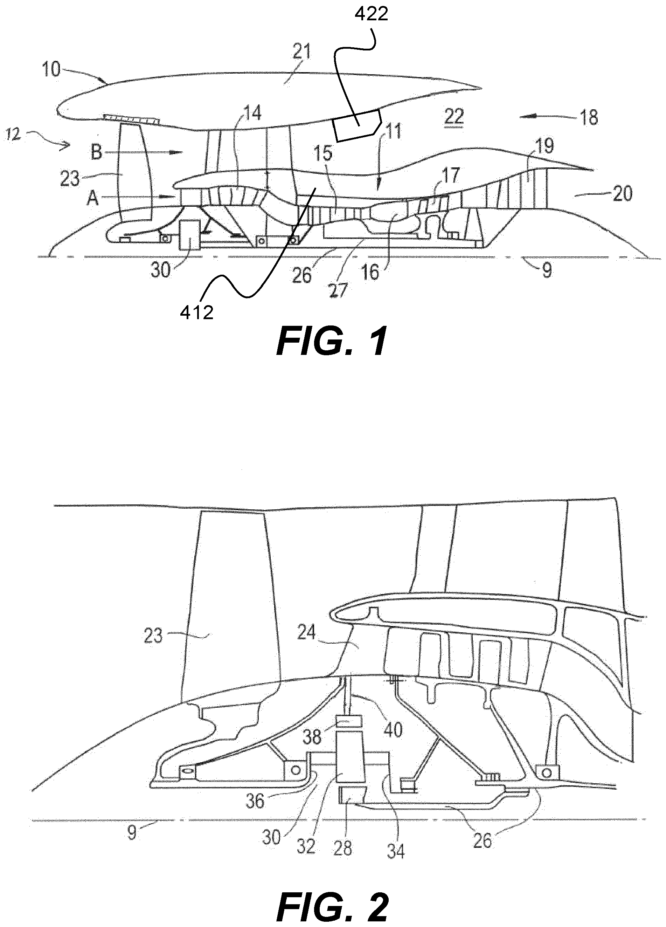

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The bypass duct 22 may comprise an engine bypass duct port 422 for supplying air from the bypass duct to an air pressurisation system or the like. The engine core 11 may also comprise an engine core port for supplying air from a compressor stage of the engine core 11 (such as the low pressure compressor 14 or the high-pressure compressor 15) to an air pressurisation system or the like. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

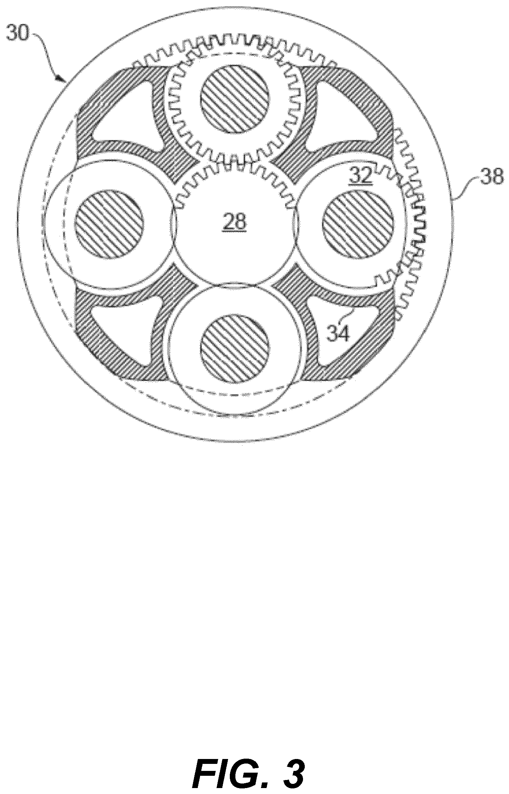

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

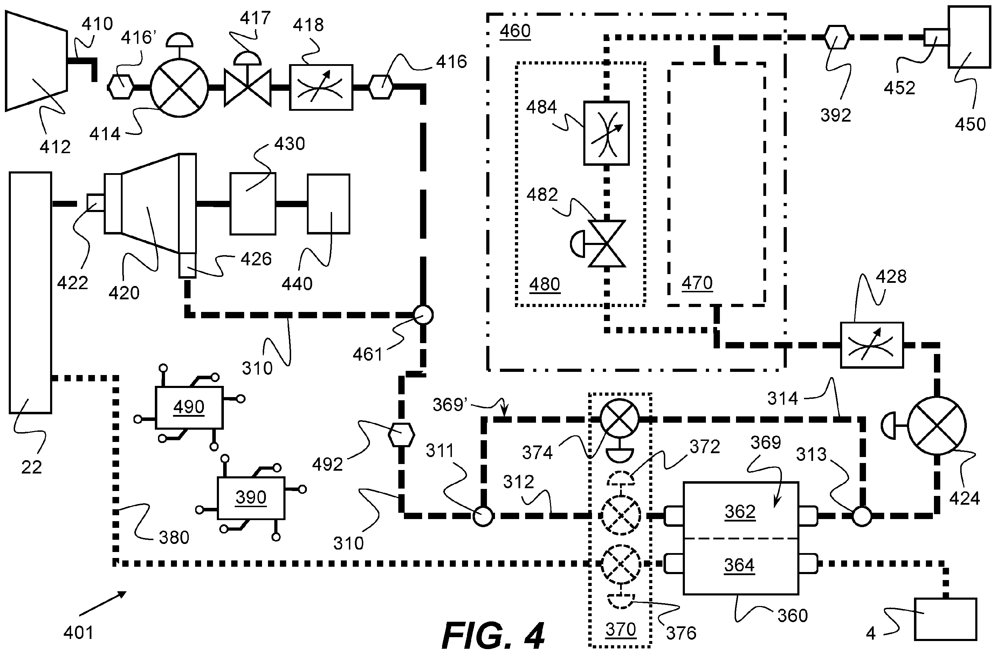

An air pressurisation system 401, according to arrangements of the present disclosure, for supplying air to an airframe system 450 is shown schematically in **Figure 4****.** The air pressurisation system 401 comprises a blower compressor 420 configured to be mechanically coupled to a spool 440 of a gas turbine engine, such as the gas turbine engine 10. The expression "spool" is used herein to denote a shaft of the engine which interconnects a compressor and a turbine of the engine core, and/or engine components which rotate together with such an engine shaft (e.g., the compressor and turbine interconnected by the shaft, and associated rotating components such as drums and disks). In the arrangement depicted in Figure 4, the air pressurisation system 401 comprises a variable transmission 430 for mechanically coupling the blower compressor 420 to the spool 440.

The variable transmission 430 allows a rotational speed of the blower compressor 420 to be decoupled from a rotational speed of the spool 440, so that a performance of the air pressurisation system 401 is not solely governed by an operating speed of the gas turbine engine (e.g., it can be controlled to operate at a target speed independent of the rotational speed of the spool, and/or at a variable speed ratio relative to the rotational speed of the spool). Inclusion of a variable transmission 430 within the air pressurisation system 401 therefore provides more versatile and adaptable means for supplying pressurised air to an airframe system. Various suitable variable transmission types will be apparent to those of ordinary skill in the art. For example, the variable transmission 430 may comprise an electric variator, as described in EP 3517436 B1.

The blower compressor 420 is configured to operate in a blower mode in which the blower compressor 420 is driven to rotate by the spool 440 to draw a first inlet flow of gases from an engine bypass duct port 422 and to discharge compressed gases to a blower compressor discharge port 426 for supply to an airframe port 452 for an airframe air use (i.e., a particular application or purpose for which the air is supplied to the airframe). Flows of gases referred to within the present specification, such as the first inlet flow of gases and the compressed gases discharged from the blower compressor may be, or be substantially comprised of, compressed air. Unless otherwise specified, the terms "flows of gases" and "flows of air" may be used interchangeably herein. It will be appreciated that when a flow of gases is referred to as a flow of air, then the flow may additionally comprise one or more other gases, e.g. contaminants, such as volatile organic compounds, burnt and unburnt hydrocarbons and/or any other contaminants present within the flow of air/gases.

A delivery line 310 extends from the blower compressor discharge port 426 to the airframe port 452. The airframe port 452 is in, or configured to be in, fluid communication with the airframe system 450.

The airframe air use may be, for example, aircraft pressurisation or cargo bay smoke eradication. The blower compressor 420 is generally configured to compress the first inlet flow of air by converting kinetic energy of the first inlet flow of air into pressure energy and heat energy. The blower compressor 420 may be any suitable type of compressor. As shown in the Figure 4, the blower compressor 420 may preferably be a centrifugal compressor.

The engine bypass duct port 422 is in fluid communication with a bypass duct 22 of the gas turbine engine. Accordingly, when operated in the blower mode, the blower compressor 420 is configured to receive the first inlet flow of air from the bypass duct 22 of the gas turbine engine. The blower compressor 420 is further configured to supply the first inlet flow of air to the airframe port 452 for example to pressurise an aircraft cabin.

The first inlet flow of air may be subject to over-pressure and/or over-temperature prevention and/or flow control prior to supply to the airframe port 452. In the arrangements shown in Figure 4, the delivery line 310 comprises a blower compressor shut off valve (SOV) 424 and a blower compressor flow control valve (FCV) 428 for each of these purposes. The SOV 424 may be configured to close in response to the pressure and/or the temperature of the air conveyed by the delivery line being excessive, as described in further detail below.

In the arrangement shown in Figure 4, the air pressurisation system 401 comprises an air treatment apparatus 460. In such arrangements, the delivery line 310 may extend at least partially through the air treatment apparatus 460 to the airframe port 452 for supply to the airframe system 450 for the airframe air use. In other arrangements, the air treatment apparatus 460 may be omitted, or may not form part of the air pressurisation system 401. The air treatment apparatus 460 may be located in the airframe.

The air treatment apparatus 460 comprises an air cycle line 470 and a diversion line 480. The air cycle line 470 may form part of the delivery line 310. The air cycle line 470 is configured to condition gases (e.g. air) received from the blower compressor 420, for example by cooling and/or dehumidifying air received from the blower compressor 420. In other words, a flow of gases through the air cycle line 470 is subject to active conditioning therein so as to change (e.g., reduce) a temperature, a pressure and/or a humidity of the flow of gases prior to supply to the airframe port 452. The air cycle line 470 may comprise, for instance, an air conditioning fan, an air conditioning compressor, an air conditioning turbine, one or more heat exchangers, a condenser, a water extractor and/or a reheater.

The diversion line 480 is configured to bypass the air cycle line 470 such that air received from the blower compressor 420 and conveyed through the diversion line 480 is not subject to active conditioning therein prior to supply to the airframe port 452. The air treatment apparatus 460 is configured to mix air from the air cycle line 470 with air from the diversion line 480 prior to combining the flows for discharge into the delivery line 310, with the delivery line 310 being configured to convey the conditioned air received from the air treatment apparatus 460 to the airframe port 452.

In the arrangement shown in Figure 4, the diversion line 480 comprises a diversion line pressure regulating valve (PRV) 482 and a diversion line flow control valve (FCV) 484. The diversion line PRV 482 is configured to regulate a pressure of gases (e.g., air) in the diversion line 480 prior to mixing with gases (e.g., air) from the air cycle line 470 for supply to the airframe port 452, to prevent supply of gases (e.g., air) at an excessively high pressure. The diversion line PRV 482 is configured to ensure that the pressure of air in the diversion line 480 downstream of the diversion line PRV 482 is no greater than an air supply pressure threshold associated with the airframe system 450. The air supply pressure threshold of the airframe system 450 may be dependent on by the airframe air use for which air is supplied to the airframe system. For instance, when the air pressurisation system 401 is required to supply air to the airframe port 452 for a cabin pressurisation purpose, the airframe system 450 may supply air directly to a cabin of an aircraft. If so, the air supply pressure threshold of the airframe system may be approximately 1 atm or approximately 1 bar (approximately 100 kPa). Accordingly, the diversion line PRV 482 may be configured to ensure that the pressure of air in the diversion line 480 downstream of the diversion line PRV 482 is no more than approximately 1 atm or approximately 1 bar (approximately 100kPa).

The diversion line FCV 484 is configured to control a flow rate (e.g., a mass-flow rate or a volumetric flow rate) of air in the diversion line 480. The air treatment apparatus 460 (for example, a controller of the air treatment apparatus 460) is configured to actuate the diversion line FCV 484 so as to control the flow rate of air in the diversion line 480 which is subsequently mixed with air from the air cycle line 470, to target a temperature of the combined flow for discharge to the airframe system 450.

In the arrangement depicted in Figure 4, the air pressurisation system 401 further comprises a core bleed line 410 configured to provide a second inlet flow of gases from a compressor 412 of a core of the gas turbine engine to the delivery line 310 in an augmented air supply mode of the air pressurisation system 401. Like the first inlet flow of gases, the second inlet flow of gases may comprise, or be substantially comprised of, a second inlet flow of air. The core bleed line 410 comprises a core bleed control valve 414. In this example, the core bleed control valve 414 is a solenoid actuated pressure-regulating valve. However, in other examples the core bleed control valve 414 may be otherwise actuated.

The second inlet flow of air does not pass through the blower compressor 420 prior to being provided to the delivery line 310 by the engine core bleed line 410, nor is it subject to any further active compression process prior to being supplied to the delivery line 310. In some examples, the second inlet flow of air does not pass through a precooler device prior to being provided to the delivery line 310 by the engine core bleed line 410. The second inlet flow of air may not be subject to any other kind of active cooling process (i.e., through a dedicated heat exchanger) prior to being supplied to the delivery line 310.

In an unaugmented air supply mode of the air pressurisation system 401, in which a flow demand of the airframe system 450 is met by the first inlet air flow through the cabin blower, the core bleed control valve 414 is fully closed which prevents air being conveyed through the engine core bleed line 410.

The airframe system 450 may be associated with a flow demand for air (e.g., a mass-flow rate demand). The flow demand of the airframe system 450 may be dictated by the airframe air use for which air is supplied to the airframe system. Under certain operating conditions, a flow delivery capacity of the air pressurisation system 401 may not be sufficient to meet the flow demand of the airframe system 450 in the unaugmented air supply mode.

The air pressurisation system 401 may further comprise an air supply mode controller 490. The air supply mode controller 490 may be configured to control the core bleed control valve 414 and thereby selectively operate the air pressurisation system 401 in the augmented air supply mode in which the core bleed control valve 414 is open and in the unaugmented air supply mode in which the core bleed control valve 414 is closed. The air supply mode controller 490 may be configured to receive a flow demand signal which corresponds to the flow demand of the airframe system 450. The flow demand signal may be received from, for example, the airframe system 450.

In the arrangement shown in Figure 4, the engine core bleed line 410 is configured to mix the second inlet flow of air with the first inlet flow of air from the blower compressor 420 at a mixing point 461 located on the delivery line 310 upstream of a bifurcation between the air cycle line 470 and the diversion line 480 (and, preferably, upstream of the air treatment apparatus 460, as shown in Figure 4). The second inlet flow of air may be subject to over-pressure regulation prior to mixing with the first inlet flow of air. For these purposes, in the arrangement of Figure 4, the engine core bleed line 410 further comprises a core bleed line PRV 417 configured to regulate a pressure of air in the engine core bleed line 410 (i.e., the second inlet flow of air) prior to mixing with air at the location upstream of the diversion line 480, for example to the air supply pressure threshold as described above.

In other arrangements of the present disclosure, the air pressurisation system 401 may not comprise the engine core bleed line 410, and hence, may not be configured to operate in an augmented air supply mode.

The SOV 424 may be configured to prevent supply of compressed air to the airframe port 452 at an excessive pressure and/or an excessive temperature. To this end, the SOV 424 may be provided with means to monitor the pressure and/or the temperature of gases conveyed by the delivery line 310 and may be configured to close in response to a determination that the pressure of gases conveyed by the delivery line 310 exceeds an SOV pressure threshold (e.g., the air supply pressure threshold discussed above) and/or in response to a determination that the temperature of gases conveyed by the delivery line 310 exceeds a SOV temperature threshold (e.g., the upper airframe system air temperature threshold discussed above). Additionally or alternatively, the SOV 424 may be configured to close in response to receipt of a signal from a controller or a sensor indicative of the pressure and/or the temperature of gases within the delivery line 310 being excessive (e.g., exceeding the SOV pressure threshold and/or the SOV temperature threshold).

The air pressurisation system 401 may further comprise a heat exchanger 360 configured to transfer heat from the compressed air conveyed by the delivery line 310 to a coolant. In the specific arrangement shown in Figure 4, the heat exchanger 360 is located upstream of the air treatment apparatus 460, such that the heat exchanger 360 is configured to receive compressed air from the blower compressor 420 for heat exchange with the coolant and to discharge the compressed air to the airframe port via the air treatment apparatus 460 (i.e., via the delivery line 310) for supply to the airframe system 450. In other arrangements, the air pressurisation system 401 may not comprise the heat exchanger 360.

In the arrangement shown in Figure 4, the delivery line 310 comprises a cooling path 312 and a bypass path 314. The cooling path 312 extends through the heat exchanger 360 such that conditioned and compressed air which flows through the cooling path 312 passes through the heat exchanger 360 for heat exchange with the coolant, while the bypass path 314 bypasses the heat exchanger 360 such that compressed air which flows through the bypass path 314 does not pass through the heat exchanger 360. The cooling path 312 and the bypass path 314 may extend between an upstream junction 311 and a downstream junction 313 (the junctions being junctions of the respective paths). However, in other arrangements the bypass path 314 may be omitted.

The heat exchanger 360 has a compressed air side 362 which forms a portion of the delivery line 310 extending through the heat exchanger 360 (i.e., forms a portion of the cooling path 312). The heat exchanger 360 also has a coolant side 364 configured to receive a coolant for heat exchange with compressed air in the compressed air side 362. A coolant line 380 extends through the coolant side 364 of the heat exchanger 360 such that the heat exchanger 360 is configured to receive coolant via the coolant line 380.

The air pressurisation system 401 may further comprise a valve arrangement 370 configured to switch the air pressurisation system 401 between operation in a baseline mode and a cooling mode. In the arrangement of Figure 4, the valve arrangement 370 comprises a valve configured to control a flow rate of compressed air through the cooling path 312. According to the disclosure, such a valve may be disposed on the cooling path 312 or the bypass path 314 and may be disposed at either, or between, the upstream junction 311 and the downstream junction 313.

In the arrangements of Figure 4, a valve 374 is disposed on the bypass path 314 such that the valve 374 is configured to selectively restrict flow along the bypass path 314. The valve arrangement 370 is configured to actuate the valve 374 to vary a proportion of the compressed air which flows along the cooling path 312 (and therefore through the compressed air side 362 of the heat exchanger 360) and a corresponding proportion of the compressed air which flows along the bypass path 314. The valve 374 may be operable in at least an open state in which it permits flow along the bypass path 314 and a closed state in which it prevents flow along the bypass path 314. The valve 374 may be operable between a plurality of open states at which flow along the bypass path 314 is restricted to a varying degree. In other arrangements, in which the bypass path is omitted, the valve arrangement 370 may not comprise the valve 372 or the valve 374.

Further, it will be appreciated that in other arrangements, the valve arrangement 370 may not comprise the second valve 372. In particular, it may be that with any respective valve in a fully open state (or absent any such valve), a flow coefficient of the bypass path is greater than a flow coefficient of the cooling path, such that in use flow preferentially flows down the bypass path. Consequently, adequate control to divert flow between the bypass and cooling paths may be provided solely by a valve provided on the bypass path.

In the specific arrangement of Figure 4, the valve arrangement 370 comprises a coolant valve 376 disposed on the coolant line 380 and configured to control a flow rate of coolant through the coolant side 364 of the heat exchanger 360 by selectively restricting flow of coolant to the heat exchanger 360 via the coolant line 380. It will be understood that the coolant valve 376 may be disposed on either side of (i.e., upstream of or downstream of) the coolant side 364 of the heat exchanger. The coolant valve 376 is operable in at least an open state in which it permits flow to the coolant side 364 of the heat exchanger 360, and a closed state in which it prevents coolant flow to the coolant side 364 of the heat exchanger 360. In other arrangements, the coolant valve 376 may be omitted.

Generally, a coolant side of a heat exchanger as envisaged in the present disclosure may be configured to receive coolant comprising, for example, air, combustible fuel, oil, lubricant fluid, water, glycol, hydraulic fluid and/or refrigerant fluid. The coolant side 364 of the heat exchanger 360 in the example of Figure 4 is configured to receive coolant from the bypass duct 22 of the gas turbine engine 10 via the coolant line 380, such that air received from the bypass duct constitutes the coolant. As shown in the example of Figure 4, the heat exchanger 360 is be configured to discharge coolant to an external environment 4. In examples in which air received from the bypass duct 22 constitutes the coolant, the heat exchanger 360 may be configured to discharge coolant to the external environment 4 via the bypass duct 22 at a bypass duct outlet, the bypass duct outlet being located downstream of the bypass duct inlet within the bypass duct 22. In other examples, the heat exchanger 360 may be configured to discharge coolant to the external environment 4 elsewhere, for example at a core terminus outlet, the core terminus outlet being located at or in proximity to a core nozzle 20 of the gas turbine engine.

The air pressurisation system 401 may further comprise an aftercooling controller 390 configured to control the valve arrangement 370 to switch between operation of the air pressurisation system 401 in the baseline mode and the cooling mode.

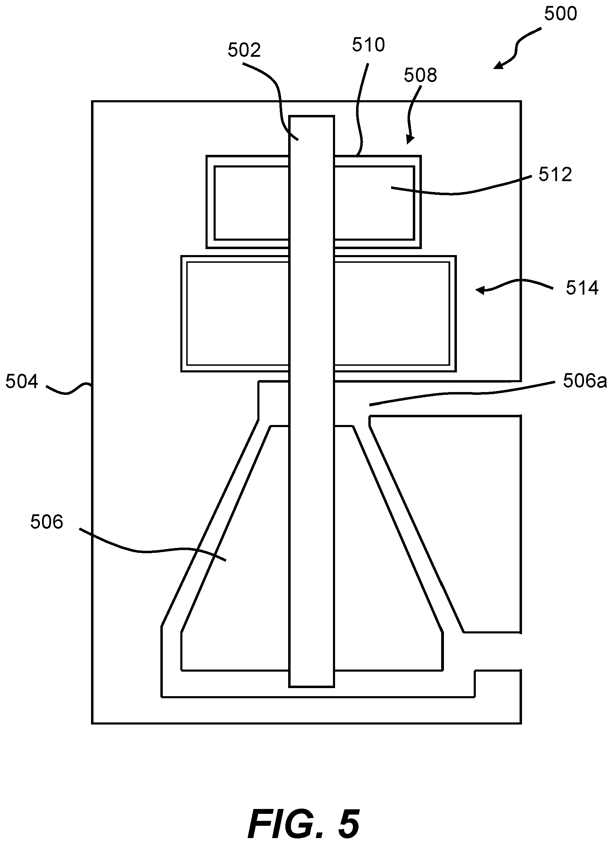

Figure 5 is a schematic view of a blower compressor 500, according to arrangements of the present disclosure, which may be provided as the blower compressor 420 within the air pressurisation system 401 described above. The blower compressor 500 comprises a rotor 502 and a housing 504. In the arrangement depicted, the blower compressor is a centrifugal blower compressor and further comprises a compressor wheel 506, e.g. an impeller, mounted on the rotor 502 for rotation together with the rotor.

The rotor 502 is supported for rotation relative to the housing 504 via one or more bearing assemblies 508. In the arrangement shown in Figure 5, the blower compressor comprises a single bearing assembly 508 provided on an inlet side of the compressor, e.g. adjacent to an inlet 506a to the compressor wheel. However, in other arrangements, the blower compressor 500 may comprise a further bearing assembly on an outlet side of the compressor, e.g. on an opposite side of the compressor from the inlet to the impeller.

The bearing assembly 508 comprises a bearing chamber 510, which may be formed in the housing 504 of the blower compressor 500, and a bearing 512 arranged within the bearing chamber. The bearing 512 is an oil lubricated bearing. Accordingly, lubricating oil is supplied to the bearing 512 to reduce friction and wear between components of the bearing that move relative to one another as the rotor 502 rotates.

It may be undesirable for oil within the bearing assembly to leak out of the bearing chamber, e.g. along the rotor 502, and reach the inlet 506a to the compressor. Lubricating oil reaching the inlet to the compressor may become entrained within the first inlet flow of gases entering the blower compressor 500 and may be carried within the compressed air supplied by the blower compressor to the airframe port 452. As described above, the air supplied by the air pressurisation system 401 may be used for cabin pressurisation. The presence of oil within the flow of gases may therefore lead to unpleasant smells within the cabin of the aircraft.

In order to reduce the risk of oil leaking from the bearing assembly 508 to the inlet of the compressor wheel, the blower compressor 500 further comprises a seal assembly 514 arranged between the bearing assembly 508 and the compressor wheel 506, e.g. along the rotor 502. The seal assembly 514 may be configured to restrict oil from the bearing assembly 508, e.g. from the bearing chamber 510, from reaching the inlet 506a to the blower compressor 500.

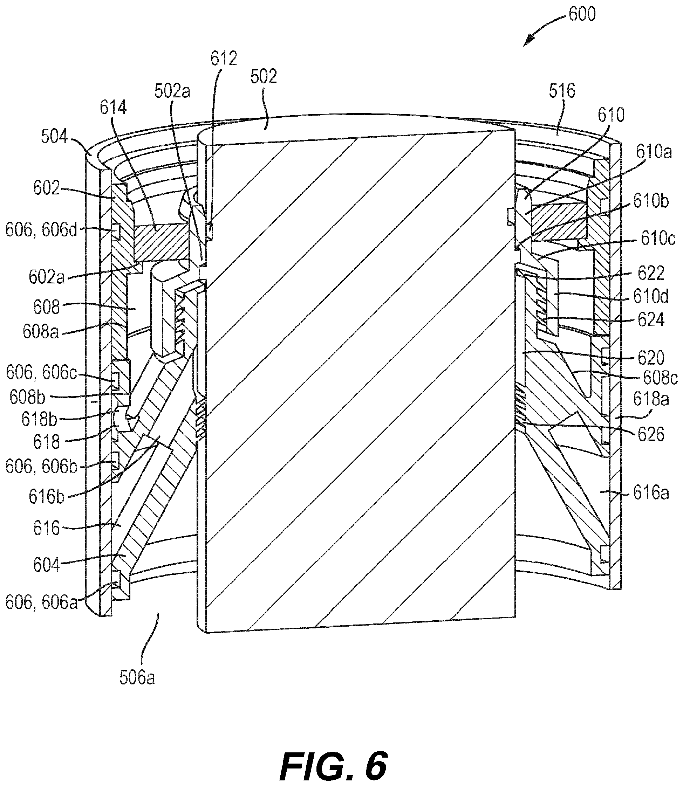

Figure 6 is a cross-sectional view of a seal assembly 600, according to arrangements of the present disclosure, for sealing a bearing chamber of a blower compressor, such as the blower compressor 500 described above. For example, the seal assembly 600 may be used as the seal assembly 514 in the blower compressor 500 shown in Figure 5.

The seal assembly 600 comprises first and second housing elements 602, 604 disposed within the housing 504 of the compressor, e.g. within a seal chamber 516 defined by the housing. The seal chamber may be located between the bearing chamber 510 of the bearing assembly, and the inlet 506a to the compressor wheel.

As depicted, the seal assembly 600 may comprise one or more housing seal elements 606, e.g. static seals, arranged between each of the first and second housing elements 602, 604 and the compressor housing 504. The housing seal elements 606 may be to prevent or restrict leakage of oil between the first and second housing elements 602, 604 and the housing 504. In other words, the housing seal elements 606 may be to prevent or restrict leakage of oil around the seal assembly 600. Additionally or alternatively, the housing seal elements 606 may be to prevent or restrict leakage of air buffer air between the compressor housing 504, and the first and/or second housing elements 602, 604, as described in greater detail below.

The first and second housing elements 602, 604 may extend about the compressor rotor 502 to form an annular air buffer chamber 608 extending about the compressor rotor 502 between, e.g. radially between, the compressor rotor 502 and the compressor housing 504. As described in greater detail below, in use of the blower compressor 500, pressurised air buffer air may be passed through the air buffer chamber 608 in order to increase the performance of the seal assembly in restricting leakage of lubricating oil from the bearing assembly 508 to the inlet to the blower compressor. A first portion of an outer surface 608a of the air buffer chamber may be formed by the first housing element and a second portion of the outer surface 608b of the air buffer chamber may be formed by the second housing element. As depicted, the first and second portions of the outer surface may be arranged adjacent to one another in an axial direction of the rotor 502.

The seal assembly 600 further comprises an oil slinger ring 610. The oil slinger ring is coupled to the compressor rotor 502 and is configured to rotate together with the compressor rotor. The seal assembly 600 may comprise one or more rotor seal elements 612, e.g. static seals, arranged between the oil slinger ring and the rotor to prevent or restrict leakage of oil between the oil slinger ring and the rotor. In other arrangements, the oil slinger ring may be integrally formed with the compressor rotor 502, in which case the rotor seal element 612 may not be present.

The oil slinger ring 610 comprises an inner portion 610a. The inner portion 610a of the oil slinger ring may be substantially cylindrical, and may be disposed about and configured to engage the rotor. The rotor seal elements 612 may be disposed between the inner portion 610a and the rotor. As depicted, the inner portion of the oil slinger ring may comprise a shoulder 610b configured to engage a complementary shoulder 502a formed on the compressor rotor in order to axially locate the oil slinger ring 610 on the compressor rotor.

The oil slinger ring 610 further comprises a radially extending portion 610c extending outward from the inner portion 610a in a direction with a radial component (relative to the compressor rotor). The radially extending portion 610c may extend at least partially into or up to the air buffer chamber 608. In use of the blower compressor 500, oil present on the radially extending portion 610c of the oil slinger ring may be urged in a radially outward direction due to the rotation of the oil slinger ring. Urging the oil outward over the radially extending portion 610c may cause the oil to flow away from a seal, e.g. the first air buffer seal 624 described below, arranged between the air buffer chamber 608 and the compressor inlet 506a, thereby reducing the risk of the oil leaking out of the air buffer chamber through the seal. Additionally, urging the oil outward over the radially extending portion 610c of the oil slinger ring may encourage the oil to become entrained within the flow of pressurised air passing through the air buffer chamber, as described in greater detail below.

The oil slinger ring 610 may further comprise an outer portion 610d formed at an opposite end of the radially extending portion 610c from the inner portion 610a. The outer portion 610d may be substantially cylindrical and may extend about the compressor rotor at a radially outward position relative to the inner portion 610a of the oil slinger ring.

The seal assembly 600 further comprises a seal 614 disposed between, e.g. axially between, the bearing chamber 510 and the air buffer chamber 608. The seal 614 may be to restrict leakage of oil from the bearing chamber 510 into the air buffer chamber 608. As depicted, the seal 614 may be coupled to the oil slinger ring 610 at a radially inner surface of the seal and may be coupled to the first housing element 602 at a radially outer surface of the seal. The first housing element 602 may comprise a shoulder 602a for abutting the seal 614 in order to axially locate the seal within the seal assembly. The radially extending portion 610c of the oil slinger ring may be disposed on an opposite side of the seal 614 from the bearing chamber 510.

The seal assembly 600 further comprises an air buffer inlet 616 and an air buffer outlet 618, each in fluid communication with the air buffer chamber 608. In use of the blower compressor 500, a flow of pressurised air buffer air may be supplied to the air buffer inlet 616. The air buffer inlet 616, air buffer chamber 608 and air buffer outlet 618 may be arranged such that the flow of air buffer air passes from the air buffer inlet, through the air buffer chamber and out of the seal assembly 600 via the air buffer outlet. Lubricating oil and oil mist that has leaked through the seal 614 into the air buffer chamber 608, optionally flowing over the oil slinger ring, may become entrained within the flow of air buffer air within the air buffer chamber and may thereby by carried out of the seal assembly through the air buffer outlet and away from the blower compressor inlet. As depicted, the air buffer inlet 616 may be positioned at a position along the rotor closer to the compressor inlet than the air buffer outlet 618, so that the flow of air buffer air acts to force any lubricating oil within the seal assembly 600 away from the compressor inlet.

As illustrated, the air buffer inlet 616 may comprise an annular inlet volume 616a formed between, e.g. radially between, the compressor housing 504 and the second housing element 604 of the seal assembly 600. The air buffer inlet 616 may further comprise an inlet passage 616b extending though the second housing element 604 of the seal assembly from the annular inlet volume to an annular flow space 620. The annular flow space 620 may be formed between, e.g. radially between, the second housing element 604 and the compressor rotor 502. In other words, the inlet passage 616b may extend through the second housing element between the compressor housing and the compressor rotor. In some arrangements, a plurality of the inlet passages 616b may be formed in the second housing element between the inlet volume and the annular flow space 620. The plurality of inlet passages 616b may be spaced circumferentially about the compressor rotor axis. The compressor housing 504 may comprise one or more air buffer inlet ports opening into the annular inlet volume 616a for the introduction of the flow of compressed air buffer air to the seal assembly.

The flow of air buffer air may be supplied to the air buffer inlet 616 at a pressure greater than an inlet pressure of the blower compressor. A first one of the seal elements 606a may be provided between the annular inlet volume 616a and the inlet to the blower compressor, in order to restrict or prevent leakage of the air buffer air from the annular inlet volume to the inlet of the blow compressor between the second housing element 604 of the seal assembly and the compressor housing 504.

The seal assembly 600 further comprises a flow restrictor 622. The flow restrictor may be configured to act as a restriction to the flow of air buffer air from the air buffer inlet to the air buffer chamber 608. The flow restrictor 622 may be configured to determine the flow rate of the air buffer air through the seal assembly 600. As depicted, the flow restrictor 622 may be provided at one end of the annular flow space 620. The flow restrictor may be arranged between the air buffer inlet 616, e.g. the annular flow space, and the air buffer chamber 608. In the arrangement illustrated, the flow restrictor 622 comprises a portion of the second housing element 604 arranged in close proximity to the compressor rotor 502 to create a gap with a reduced flow area for the air buffer air, e.g. compared to the flow area for the air buffer air through the air buffer inlet 616, annular flow space 620, air buffer chamber 608 and air buffer outlet 618. A maximum flow rate of the air buffer air may thereby be determined based on the flow area allowed by the flow restrictor 622, e.g. between the flow restrictor and the compressor rotor.

The seal assembly 600 further comprises a first air buffer seal 624. The first air buffer seal is arranged between the air buffer inlet 616 and the air buffer chamber 608 relative to the flow of air buffer air through the seal assembly. As depicted, the first air buffer seal 624 may be arranged between the annular flow space 620 and the air buffer chamber 608 and may be arranged between the flow restrictor 622 and the air buffer chamber 608 relative to the flow of air buffer air. The first air buffer seal 624 may be a non-contact seal and may be configured to restrict the flow of air buffer air by enforcing a tortuous flow path on the air buffer air passing through the first air buffer seal 624. For example, the first air buffer seal 624 may comprise a labyrinth seal. The first air buffer seal 624 may be formed at a radially outward position relative to the flow restrictor 622. As depicted, the first air buffer seal 624 may at least partially overlap the flow restrictor along the rotor 502.

In the arrangement depicted in Figure 6, the first air buffer seal 624 is formed between the second housing element 604 and the oil slinger ring 610. In particular, fins of the labyrinth seal are formed on a portion of the second housing element that is aligned (in an axial direction of the rotor) with the radially outer portion 610d of the oil slinger ring. Tips of the fins of the labyrinth seal are positioned at a predetermined distance (in a radial direction) from a radially inner surface of the radially outer portion 610d of the oil slinger ring. As described above, the radially outer portion of the oil slinger ring may extend from the radially extending portion 610c. Hence, by positioning the first air buffer seal 624 on the inside of the radially outer portion, the radially outer portion may act as an umbrella, preventing oil that is urged outwards over the radially extending portion of the oil slinger ring from dripping, or being urged, directly on to the first air buffer seal. Additionally, when the seal assembly 600 is oriented vertically, the radially outer portion 610d of the oil slinger ring may extend below the first air buffer seal 624. Hence, in order to reach the first air buffer seal, oil or oil mist would need to travel upwards after passing over the oil slinger ring. The configuration of the oil slinger ring and first air buffer seal as described herein thereby further discourages oil from passing from the seal 614 through the first air buffer seal 624.

The first air buffer seal 624 may be configured to be more effective in a flow direction from the air buffer chamber 608 towards the air buffer inlet 616. For example, when the first air buffer seal comprises a labyrinth seal, fins of the labyrinth seal may be canted in a direction towards the air buffer chamber 608, away from the air buffer inlet relative the flow of air though the first air buffer seal. The configuration of the first air buffer seal may thereby act to prevent or restrict air buffer air, and oil entrained within the air buffer air, from passing back from the air buffer chamber towards the air buffer inlet and/or towards the inlet of the blower compressor, e.g. via the annular flow space.

The air buffer outlet 618 may comprise an annular outlet volume 618a formed between the compressor housing 504 and the second housing element of the seal assembly 600. The air buffer outlet 618 may further comprise an outlet passage 618b extending though the second housing element 604 of the seal assembly from the air buffer chamber 608 to the annular outlet volume 618a. In some arrangements, the seal assembly may comprise a plurality of the outlet passages 618b spaced circumferentially about the seal assembly 600. The compressor housing 504 may comprise one or more air buffer outlet ports in fluidic communication with the annular outlet volume 618a, for the air buffer air to be outlet from the blower compressor 500.

As depicted, ones of the seal elements 606, e.g. second and third seal elements 606b, 606c, may be provided between the annular outlet volume 618a and the annular inlet volume 614a and/or on an opposite side of the annular outlet volume from the annular inlet volume. A fourth seal element 606d may be provided for sealing between the first housing element 602 and the compressor housing 504.

The seal assembly 600 may further comprise a second air buffer seal 626. The second air buffer seal 626 may be provided at an opposite end of the annular flow space 620 from the flow restrictor 622. The second air buffer seal 626 may be arranged between the annular flow space and the inlet to the blower compressor. The second air buffer seal 626 may thereby be arranged between the air buffer inlet 616 and the inlet to the blower compressor. As mentioned above, the pressure of the air buffer air supplied to the air buffer inlet may be greater than an inlet pressure to the blower compressor. The second air buffer seal 626 may therefore be configured to prevent or restrict the flow of the air buffer air from the air buffer inlet to the inlet to the blower compressor, e.g. via the annular flow space 620.

The second air buffer seal 626 may be a non-contact seal and may be configured to restrict the flow of air buffer air by enforcing a tortuous flow path on the air buffer air passing through the second air buffer seal 626. For example, the second air buffer seal 626 may comprise a labyrinth seal. In the arrangement depicted in Figure 5, the second air buffer seal is formed between the second housing element 604 of the seal assembly and the compressor rotor 502. In particular, fins of the labyrinth seal are formed on the second housing element such that tips of the fins are disposed at a predetermined distance from the surface of the rotor 502, in order to create the tortuous flow path for the air buffer air passing through the second air buffer seal.

The second air buffer seal 626 may be configured to be more effective in a flow direction from the air buffer inlet, e.g. the annular flow space, towards the compressor inlet. For example, when the second air buffer seal 626 comprises a labyrinth seal, fins of the labyrinth seal may be canted in a direction towards the air buffer inlet/annular flow space and away from the compressor inlet relative to the flow of air though the second air buffer seal.

The second air buffer seal 626 may be a smaller radius seal that the first air buffer seal 624. A leakage flow area through the second air buffer seal may therefore be less than a leakage flow area through the first air buffer seal. In some arrangements, the leakage flow area through the second air buffer seal may be less than a flow area past the flow restrictor 622. Hence, a flow rate of air buffer air through the second air buffer seal 626 may be less than a flow rate of air buffer air through the flow restrictor 622 and the first air buffer seal 624.

As illustrated in Figure 6, a radially inner surface 608c of the air buffer chamber may be arranged an angle of less than 90° relative to the rotational axis of the rotor 502, e.g. greater than 0° and less than 90°. When the blower compressor 500 is not in use, and the rotor 502 is oriented vertically, lubricating oil that has passed through the seal 614 may be encouraged to flow towards the air buffer outlet 618 by virtue of the orientation of the radially inner surface 608c. As depicted, the radially inner surface 608c may extend in an axial direction between the oil slinger ring 610 and the air buffer outlet. Further, the radially inner surface 608c may have a radius less than the radially outer portion 610d, e.g. an outer surface of the radially outer portion, of the oil slinger ring. Hence, oil that is present on the oil slinger ring may be encouraged to flow onto the radially inner surface 608c and towards the air buffer outlet 618 under the action of gravity.

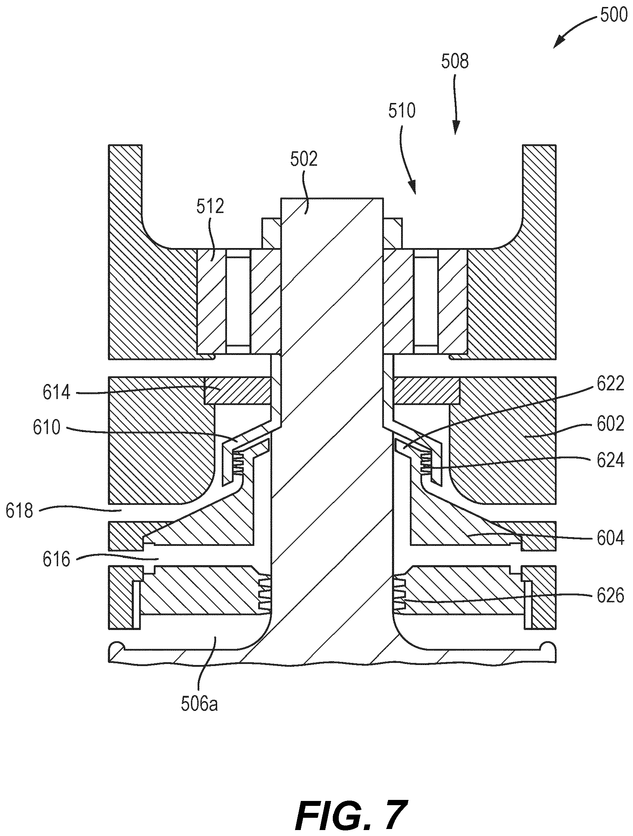

Figure 7 is a cross-sectional view of a seal assembly 700, according to another arrangement of the present disclosure. The seal assembly 700 may be provided for sealing the bearing chamber of the blower compressor, such as the blower compressor 500 described above, e.g. in place of the seal assembly 600. The seal assembly 700 is similar to the seal assembly 600, and the same reference numerals may be used in Figure 7 to denote the same features as those of the seal assembly 600. The seal assembly 700 differs from the seal assembly shown in Figure 6, in that the inlet passages 616b of the seal assembly 700 extend in a substantially radial direction between the annular inlet volume 616a and the annular flow space 620. In contrast, the inlet passages 616b of the seal assembly 600 may be parallel with the radially inner surface 608c of the air buffer chamber. When the inlet passages 614b extend in a substantially radial direction between the annular inlet volume 614a and the annular flow space 620, the manufacturability of the seal assembly 700, and in particular the second housing element 604 of the seal assembly 700, may be improved compared to the seal assembly 600. However, when the inlet passages 616b are parallel with the radially inner surface 608c of the air buffer chamber, a total mass of the seal assembly 600, e.g. the second housing element 604, may be reduced, e.g. minimised, compared to the seal assembly 700.

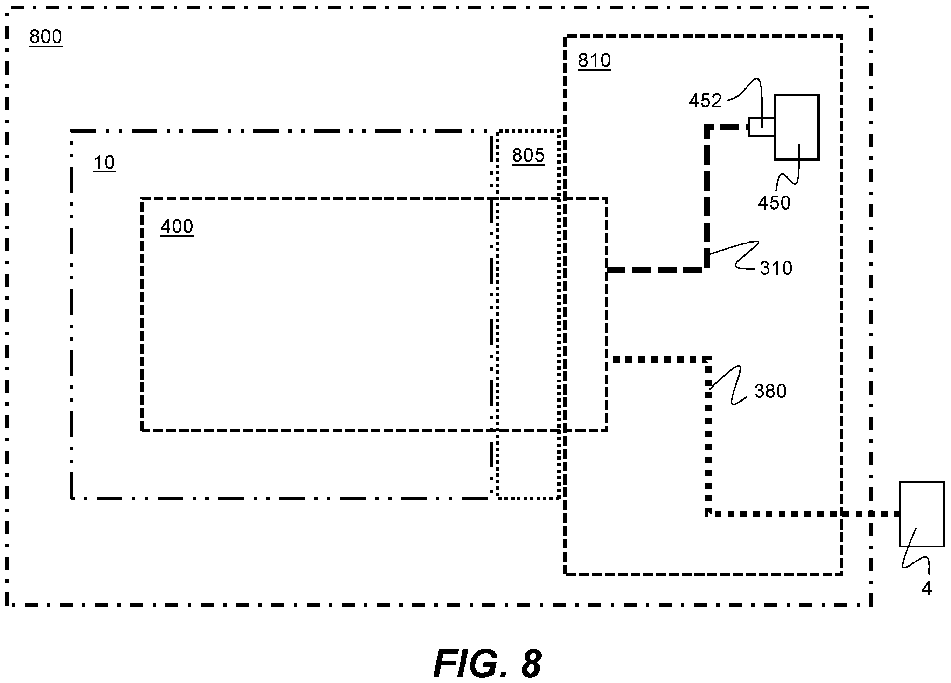

Figure 8 shows a schematic view of an aircraft 800 which includes an airframe 810, a gas turbine engine 10, a pylon 805 and an air pressurisation system 400. The pylon 805 is configured to attach the gas turbine engine 10 to the airframe 810 (e.g., to a wing of the airframe 810), as will be appreciated by those of ordinary skill in the art. The gas turbine engine 10 may be in accordance with the gas turbine engine 10 described above with reference to Figures 1 to 3. The air pressurisation system 400 may have any suitable combination of the features described above with respect to the air pressurisation system 401. The air pressurisation system 400 may be at least partially disposed within the gas turbine engine 10, at least partially disposed within the pylon 805 and/or at least partially disposed within the airframe 810. For instance, the blower compressor 420 may be disposed within the gas turbine engine 10 whereas the air treatment apparatus 460 (if present) may be disposed within the airframe 810. The airframe 810 comprises the airframe system 450 to which the airframe port 452 is configured to supply conditioned and compressed (i.e., pressurised) air from the air pressurisation system 400. The heat exchanger 360 may be disposed within the gas turbine engine 10 or within the pylon 805. In some examples, the blower compressor SOV 424 may be located at or upstream of a boundary between the gas turbine engine 10 and the airframe 810 or located at or upstream of a boundary between the pylon 805 and the airframe 810 to prevent supply of compressed air to the airframe 810 at an excessive pressure and/or an excessive temperature. Accordingly, the blower compressor SOV 424 may protect an airframe ducting system (e.g. a wing ducting system) from compressed air being supplied at an excessive pressure and/or an excessive temperature.

This disclosure contemplates that the functions described with respect to each of the aftercooling controller 390 and the air supply mode controller 490, if both are present, may be achieved by a single (e.g., unified) air pressurisation system controller. Further, it will be appreciated that any of the aftercooling controller 390, the air supply mode controller 490 and/or the single air pressurisation system controller as referred to herein may be or form a part of a multifunctional controller configured to control multiple systems of the gas turbine engine 10, which may be referred to in the art as an electronic engine controller (EEC).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined by the appended claims.

## Claims

1. An air pressurisation system (400, 401) for supplying pressurised air to a cabin of an aircraft (800), the air pressurisation system comprising:
a blower compressor (420, 500) configured to be mechanically coupled to a spool (440) of a gas turbine engine (10) and configured to receive an inlet flow of air from a bypass duct (22) of the gas turbine engine, and
a delivery line (310) configured to convey air compressed by the blower compressor to a cabin pressurisation system of the aircraft,
wherein the blower compressor comprises:
a rotor (502) configured to be mechanically coupled to the spool of the gas turbine engine;; and a bearing assembly (508);
**characterized in that** the bearing assembly is provided on an inlet side of the blower compressor and comprises an oil-lubricated bearing (512) for supporting rotation of the rotor, wherein the oil-lubricated bearing is disposed within a bearing chamber (510); and **in that** the blower compressor comprises a seal assembly (514, 600, 700) for restricting oil from the bearing chamber from reaching an inlet (506a) of the blower compressor;
wherein the seal assembly comprises:
a seal (614) disposed between the bearing chamber and an air buffer chamber (608);
an air buffer inlet (616) configured to receive a flow of pressurised air into the air buffer chamber; and
an air buffer outlet (618) configured to allow the flow of pressurised air to be exhausted from the air buffer chamber together with oil from the bearing chamber that has passed through the seal and become entrained within the flow of pressurised air.

2. The air pressurisation system (400, 401) of claim 1, wherein the system further comprises a first air buffer seal (624) arranged to restrict a flow of air buffer air between the air buffer chamber (608) and the air buffer inlet (616).

3. The air pressurisation system (400, 401) of claim 2, wherein the first air buffer seal (614) comprises a seal configured to create a tortuous path for air to pass between the air buffer chamber (608) and the air buffer inlet (616).

4. The air pressurisation system (400, 401) of claim 2 or 3, wherein the first air buffer seal (624) is a labyrinth seal comprising a plurality of fins, wherein the fins are angled relative to the flow of air between the air buffer chamber (608) and the air buffer inlet (616), so that the first air buffer seal is more effective in a flow direction from the air buffer chamber towards the air buffer inlet.

5. The air pressurisation system (400, 401) of any of the preceding claims, wherein the system further comprises a second air buffer seal (626) arranged to restrict a flow of air between the air buffer inlet (616) and an inlet (506a) of the blower compressor (420, 500).

6. The air pressurisation system (400, 401) of claim 5, wherein the second air buffer seal (626) comprises a seal configured to create a tortuous path for air to pass between the air buffer inlet (616) and the air buffer chamber (608).

7. The air pressurisation system (400, 401) of claim 5 or 6, wherein the second air buffer seal (626) comprises a labyrinth seal comprising fins, wherein the fins are canted in a direction towards the air buffer inlet and away from the blower compressor inlet relative to the flow of air through the second air buffer seal (626).

8. The air pressurisation system (400, 401) of any of claims 5 to 7 when depending on claim 2, wherein the first air buffer seal (624) is positioned radially outward of the second air buffer seal (626).

9. The air pressurisation system (400, 401) of claim 8, wherein a leakage flow area through the second air buffer seal (626) is less than a leakage flow area through the first air buffer seal (624).

10. The air pressurisation system (400, 401) of any of the preceding claims, wherein the system further comprises a flow restrictor (622) configured to restrict a flow rate of air buffer air between the air buffer inlet (616) and the air buffer chamber (608).

11. The air pressurisation system (400, 401) of claim 10 when depending on claim 2, wherein the flow restrictor (622) is arranged between the air buffer inlet (616) and the first air buffer seal (624).

12. The air pressurisation system (400, 401) of any of the preceding claims, wherein the system further comprises an oil slinger ring (610) configured to rotate together with the rotor (502), wherein the oil slinger ring comprises an inner portion (610a), configured to engage the rotor and a radially extending portion (610c) extending from the inner portion (610a) towards the air buffer chamber (608).

13. The air pressurisation system (400, 401) of claim 12 when depending on claim 2, wherein the first air buffer seal (624) has an outer radius smaller than an outer radius of the radially extending portion (610c) of the oil slinger ring (610).

14. The air pressurisation system (400, 401) of any of the preceding claims, wherein the air buffer chamber (608) comprises a radially inner surface (608c) arranged at an angle relative to a rotational axis of the rotor (502) to thereby encourage oil that has passed through the seal (614) to flow towards the air buffer outlet (618).

15. An aircraft (800) comprising an airframe (810), a gas turbine engine (10) and the air pressurisation system (401) of any preceding claim.

## Patentansprüche

1. Luftdruckbeaufschlagungssystem (400, 401) zum Zuführen von druckbeaufschlagter Luft zu einer Kabine eines Luftfahrzeugs (800), wobei das Luftdruckbeaufschlagungssystem Folgendes umfasst:
einen Gebläsekompressor (420, 500), der dazu konfiguriert ist, mechanisch an eine Welle (440) eines Gasturbinentriebwerks (10) gekoppelt zu sein, und dazu konfiguriert ist, eine Einlassströmung von Luft aus einer Umgehungsleitung (22) des Gasturbinentriebwerks aufzunehmen, und
eine Zufuhrleitung (310), die dazu konfiguriert ist, durch den Gebläsekompressor komprimierte Luft zu einem Kabinendruckbeaufschlagungssystem des Luftfahrzeugs zu befördern, wobei der Gebläsekompressor Folgendes umfasst:
einen Rotor (502), der dazu konfiguriert ist, mechanisch an die Welle des Gasturbinentriebwerks gekoppelt zu sein; und eine Lageranordnung (508);
**dadurch gekennzeichnet, dass** die Lageranordnung an einer Einlassseite des Gebläsekompressors bereitgestellt ist und ein ölgeschmiertes Lager (512) zum Unterstützen der Drehung des Rotors umfasst, wobei das ölgeschmierte Lager innerhalb einer Lagerkammer (510) angeordnet ist;
und dass der Gebläsekompressor eine Dichtungsanordnung (514, 600, 700) umfasst, um zu beschränken, dass Öl aus der Lagerkammer einen Einlass (506a) des Gebläsekompressors erreicht;
wobei die Dichtungsanordnung Folgendes umfasst:
eine Dichtung (614), die zwischen der Lagerkammer und einer Luftpufferkammer (608) angeordnet ist;
einen Luftpuffereinlass (616), der dazu konfiguriert ist, eine Strömung von druckbeaufschlagter Luft in die Luftpufferkammer aufzunehmen; und
einen Luftpufferauslass (618), der dazu konfiguriert ist, zu ermöglichen, dass die Strömung von druckbeaufschlagter Luft aus der Luftpufferkammer zusammen mit Öl aus der Lagerkammer, das durch die Dichtung hindurchgegangen ist und in der Strömung von druckbeaufschlagter Luft mitgerissen wird, ausgestoßen wird.

2. Luftdruckbeaufschlagungssystem (400, 401) nach Anspruch 1, wobei das System ferner eine erste Luftpufferdichtung (624) umfasst, die dazu eingerichtet ist, eine Strömung von Luftpufferluft zwischen der Luftpufferkammer (608) und dem Luftpuffereinlass (616) zu beschränken.

3. Luftdruckbeaufschlagungssystem (400, 401) nach Anspruch 2, wobei die erste Luftpufferdichtung (614) eine Dichtung umfasst, die dazu konfiguriert ist, einen gewundenen Weg zu schaffen, damit Luft zwischen der Luftpufferkammer (608) und dem Luftpuffereinlass (616) hindurchgeht.

4. Luftdruckbeaufschlagungssystem (400, 401) nach Anspruch 2 oder 3, wobei die erste Luftpufferdichtung (624) eine Labyrinthdichtung ist, die eine Vielzahl von Rippen umfasst, wobei die Rippen in Bezug auf die Luftströmung zwischen der Luftpufferkammer (608) und dem Luftpuffereinlass (616) abgewinkelt sind, sodass die erste Luftpufferdichtung in einer Strömungsrichtung von der Luftpufferkammer zu dem Luftpuffereinlass wirksamer ist.

5. Luftdruckbeaufschlagungssystem (400, 401) nach einem der vorhergehenden Ansprüche, wobei das System ferner eine zweite Luftpufferdichtung (626) umfasst, die dazu eingerichtet ist, eine Luftströmung zwischen dem Luftpuffereinlass (616) und einem Einlass (506a) des Gebläsekompressors (420, 500) zu beschränken.

6. Luftdruckbeaufschlagungssystem (400, 401) nach Anspruch 5, wobei die zweite Luftpufferdichtung (626) eine Dichtung umfasst, die dazu konfiguriert ist, einen gewundenen Weg zu schaffen, damit Luft zwischen dem Luftpuffereinlass (616) und der Luftpufferkammer (608) hindurchgeht.

7. Luftdruckbeaufschlagungssystem (400, 401) nach Anspruch 5 oder 6, wobei die zweite Luftpufferdichtung (626) eine Labyrinthdichtung umfasst, die Rippen umfasst, wobei die Rippen in einer Richtung zu dem Luftpuffereinlass und weg von dem Gebläsekompressoreinlass in Bezug auf die Luftströmung durch die zweite Luftpufferdichtung (626) gekippt sind.

8. Luftdruckbeaufschlagungssystem (400, 401) nach einem der Ansprüche 5 bis 7, wenn abhängig von Anspruch 2, wobei die erste Luftpufferdichtung (624) radial außerhalb der zweiten Luftpufferdichtung (626) positioniert ist.

9. Luftdruckbeaufschlagungssystem (400, 401) nach Anspruch 8, wobei ein Leckageströmungsbereich durch die zweite Luftpufferdichtung (626) kleiner als ein Leckageströmungsbereich durch die erste Luftpufferdichtung (624) ist.

10. Luftdruckbeaufschlagungssystem (400, 401) nach einem der vorhergehenden Ansprüche, wobei das System ferner einen Strömungsbegrenzer (622) umfasst, der dazu konfiguriert ist, eine Strömungsrate von Luftpufferluft zwischen dem Luftpuffereinlass (616) und der Luftpufferkammer (608) zu beschränken.

11. Luftdruckbeaufschlagungssystem (400, 401) nach Anspruch 10, wenn abhängig von Anspruch 2, wobei der Strömungsbegrenzer (622) zwischen dem Luftpuffereinlass (616) und der ersten Luftpufferdichtung (624) eingerichtet ist.

12. Luftdruckbeaufschlagungssystem (400, 401) nach einem der vorhergehenden Ansprüche, wobei das System ferner einen Ölschleuderring (610) umfasst, der dazu konfiguriert ist, sich zusammen mit dem Rotor (502) zu drehen, wobei der Ölschleuderring einen inneren Abschnitt (610a), der dazu konfiguriert ist, mit dem Rotor in Eingriff zu treten, und einen sich radial erstreckenden Abschnitt (610c) umfasst, der sich von dem inneren Abschnitt (610a) zu der Luftpufferkammer (608) erstreckt.

13. Luftdruckbeaufschlagungssystem (400, 401) nach Anspruch 12, wenn abhängig von Anspruch 2, wobei die erste Luftpufferdichtung (624) einen Außenradius aufweist, der kleiner als ein Außenradius des sich radial erstreckenden Abschnitts (610c) des Ölschleuderrings (610) ist.

14. Luftdruckbeaufschlagungssystem (400, 401) nach einem der vorhergehenden Ansprüche, wobei die Luftpufferkammer (608) eine radial innere Oberfläche (608c) umfasst, die in einem Winkel relativ zu einer Drehachse des Rotors (502) eingerichtet ist, um dadurch zu fördern, dass Öl, das durch die Dichtung (614) hindurchgegangen ist, zu dem Luftpufferauslass (618) strömt.

15. Luftfahrzeug (800), umfassend ein Flugwerk (810), ein Gasturbinentriebwerk (10) und das Luftdruckbeaufschlagungssystem (401) nach einem vorhergehenden Anspruch.

## Revendications

1. Système de pressurisation d'air (400, 401) destiné à fournir de l'air pressurisé à une cabine d'un aéronef (800), le système de pressurisation d'air comprenant :
un compresseur de ventilateur (420, 500) conçu pour être couplé mécaniquement à un corps (440) d'un moteur à turbine à gaz (10) et conçu pour recevoir un flux d'entrée de gaz en provenance d'un conduit de dérivation (22) du moteur à turbine à gaz, et
une conduite de distribution (310) conçue pour transporter l'air comprimé par le compresseur de ventilateur jusqu'à un système de pressurisation de cabine de l'aéronef, ledit compresseur de ventilateur comprenant :
un rotor (502) conçu pour être couplé mécaniquement au corps du moteur à turbine à gaz ; et un ensemble palier (508) ;
**caractérisé en ce que** l'ensemble palier est prévu sur un côté d'entrée du compresseur de ventilateur et comprend un palier lubrifié à l'huile (512) destiné à supporter la rotation du rotor, ledit palier lubrifié à l'huile étant disposé à l'intérieur d'une chambre de palier (510) ;
et **en ce que** le compresseur de ventilateur comprend un ensemble joint d'étanchéité (514, 600, 700) destiné à empêcher l'huile provenant de la chambre de palier d'atteindre une entrée (506a) du compresseur de ventilateur ;
ledit ensemble joint d'étanchéité comprenant :
un joint d'étanchéité (614) disposé entre la chambre de palier et une chambre (608) de tampon d'air ;
une entrée (616) de tampon d'air conçue pour recevoir un flux d'air pressurisé dans la chambre de tampon d'air ; et
une sortie (618) de tampon d'air conçue pour permettre au flux d'air pressurisé d'être évacué de la chambre de tampon d'air avec l'huile provenant de la chambre de palier qui est passée à travers le joint d'étanchéité et qui est entraînée dans le flux d'air pressurisé.

2. Système de pressurisation d'air (400, 401) de la revendication 1, ledit système comprenant en outre un premier joint d'étanchéité (624) de tampon d'air agencé pour limiter un flux d'air de tampon d'air entre la chambre (608) tampon d'air et l'entrée (616) tampon d'air.

3. Système de pressurisation d'air (400, 401) de la revendication 2, ledit premier joint d'étanchéité (614) de tampon d'air comprenant un joint d'étanchéité conçu pour créer un trajet tortueux pour que l'air passe entre la chambre (608) de tampon d'air et l'entrée (616) de tampon d'air.

4. Système de pressurisation d'air (400, 401) de la revendication 2 ou 3, ledit premier joint d'étanchéité (624) de tampon d'air étant un joint d'étanchéité à labyrinthe comprenant une pluralité d'ailettes, lesdites ailettes étant inclinées par rapport au flux d'air entre la chambre (608) de tampon d'air et l'entrée (616) de tampon d'air, afin que le premier joint d'étanchéité de tampon d'air soit plus efficace dans une direction de flux allant de la chambre de tampon d'air vers l'entrée de tampon d'air.

5. Système de pressurisation d'air (400, 401) de l'une quelconque des revendications précédentes, ledit système comprenant en outre un second joint d'étanchéité (626) de tampon d'air agencé pour limiter un flux d'air entre l'entrée (616) de tampon d'air et une entrée (506a) du compresseur de ventilateur (420, 500).

6. Système de pressurisation d'air (400, 401) de la revendication 5, ledit second joint d'étanchéité (626) de tampon d'air comprenant un joint d'étanchéité conçu pour créer un trajet tortueux pour que l'air passe entre l'entrée (616) de tampon d'air et la chambre (608) de tampon d'air.

7. Système de pressurisation d'air (400, 401) de la revendication 5 ou 6, ledit second joint d'étanchéité (626) de tampon d'air comprenant un joint d'étanchéité à labyrinthe comprenant des ailettes, lesdites ailettes étant inclinées dans une direction vers l'entrée de tampon d'air et s'éloignant de l'entrée de compresseur de ventilateur par rapport à au flux d'air à travers le second joint d'étanchéité (626) de tampon d'air.

8. Système de pressurisation d'air (400, 401) de l'une quelconque des revendications 5 à 7 lorsqu'elle dépend de la revendication 2, ledit premier joint d'étanchéité (624) de tampon d'air étant positionné radialement vers l'extérieur du second joint d'étanchéité (626) de tampon d'air.

9. Système de pressurisation d'air (400, 401) de la revendication 8, une zone de flux de fuite à travers le second joint d'étanchéité (626) de tampon d'air étant inférieure à une zone de flux de fuite à travers le premier joint d'étanchéité (624) de tampon d'air.

10. Système de pressurisation d'air (400, 401) de l'une quelconque des revendications précédentes, ledit système comprenant en outre un limiteur de débit (622) conçu pour restreindre un débit d'air de tampon d'air entre l'entrée (616) de tampon d'air et la chambre (608) de tampon d'air.

11. Système de pressurisation d'air (400, 401) de la revendication 10 lorsqu'elle dépend de la revendication 2, ledit limiteur de débit (622) étant agencé entre l'entrée (616) de tampon d'air et le premier joint d'étanchéité (624) de tampon d'air.

12. Système de pressurisation d'air (400, 401) de l'une quelconque des revendications précédentes, ledit système comprenant en outre un anneau de projection (610) d'huile conçu pour tourner ensemble avec le rotor (502), ledit anneau de projection d'huile comprenant une partie interne (610a), conçue pour se mettre en prise avec le rotor et une partie s'étendant radialement (610c) s'étendant de la partie interne (610a) vers la chambre (608) de tampon d'air.

13. Système de pressurisation d'air (400, 401) de la revendication 12 lorsqu'elle dépend de la revendication 2, ledit premier joint d'étanchéité (624) de tampon d'air possédant un rayon externe inférieur à un rayon externe de la partie s'étendant radialement (610c) de l'anneau de projection (610) d'huile.

14. Système de pressurisation d'air (400, 401) de l'une quelconque des revendications précédentes, ladite chambre (608) de tampon d'air comprenant une surface radialement interne (608c) agencée à un angle par rapport à un axe de rotation du rotor (502) pour ainsi inciter l'huile qui a traversé le joint d'étanchéité (614) à s'écouler vers la sortie (618) de tampon d'air.

15. Aéronef (800) comprenant une cellule (810), un moteur à turbine à gaz (10) et le système de pressurisation d'air (401) d'une quelconque revendication précédente.
